# EUROPÄISCHE PATENTANMELDUNG

(11) **EP 1 854 605 A2**
(43) Veröffentlichungstag der Anmeldung: **14.11.2007**
(21) Anmeldenummer: 07009357.0
(22) Anmeldetag: 10.05.2007
(51) Int. Cl.: B27G 19/02, B23D 59/00, B27B 5/38, F16P 3/14

(54) **Sicherheitsvorrichtung für Tisch- und Formatkreissägen**

(30) Priorität: 10.05.2006 DE 202006007555 U
(71) Anmelder: Wilhelm Altendorf GmbH & Co. KG, 32429 Minden (DE); Otto Martin Maschinenbau GmbH & Co. KG, 87724 Ottobeuren (DE)
(72) Erfinder: Altendorf, Wilfried, 32429 Minden (DE); Martin, Peter, 87724 Ottobeuren (DE)
(74) Vertreter: Eisenführ, Speiser & Partner

(57) **Zusammenfassung**

Die Erfindung betrifft eine Sicherheitsvorrichtung zur Vermeidung von Arbeitsunfällen an Kreissägen. Die Sicherheitsvorrichtung umfasst eine Sensorvorrichtung zur Detektion eines Körperteils eines Benutzers in einem Gefahrenbereich, eine Schneidstoppvorrichtung zum schnellen Verhindern einer Schneidwirkung eines Kreissägeblatts der Kreissäge im Gefahrenbereich, und eine Steuerungsvorrichtung, welche mit der Sensorvorrichtung und der SchneidstopvorriChtung gekoppelt und derart ausgebildet ist, dass die Schneidstoppvorrichtung aktiviert wird, wenn die Sensorvorrichtung einen Körperteil im Gefahrenbereich detektiert. Die Schneidstoppvorrichtung umfasst eine Bremsvorrichtung mit einer Bremsscheibe, die mit dem Kreissägeblatt zur Übertragung eines Drehmoments verbunden ist und mit zumindest einem Bremskörper, der so ausgebildet ist, dass er in einer ersten Position nicht im Bremseingriff mit der Bremsscheibe ist, und in einer zweiten Position im Bremseingriff mit der Bremsscheibe ist und in dieser zweiten Position durch die Reibkraft zwischen Bremsscheibe und Bremskörper eine selbstverstärkend Flächenpressungskraft und hieraus resultierende tribologische Bremskraft auf die Bremsscheibe ausübt.

## Beschreibung

Die Erfindung betrifft eine Sicherheitsvorrichtung zur Vermeidung von Arbeitsunfällen an Kreissägen, umfassend: eine Sensorvorrichtung zur Detektion eines Körperteils eines Benutzers in einem Gefahrenbereich, eine Schneidstoppvorrichtung zum schnellen Verhindern einer Schneidwirkung eines Kreissägeblatts der Kreissäge im Gefahrenbereich, und eine Steuerungsvorrichtung, welche mit der Sensorvorrichtung und der Schneidstopvorrichtung gekoppelt und derart ausgebildet ist, dass die Schneidstoppvorrichtung aktiviert wird, wenn die Sensorvorrichtung einen Körperteil im Gefahrenbereich detektiert,

Kreissägemaschinen gehören insbesondere bei Nutzung durch weniger erfahrenes Personal zu den gefährlicheren Arbeitsgeräten, wobei allein in den USA bis zu 30.000 Verletzungen pro Jahr registriert werden, die in 10% der Fälle zu Amputationen führen. Allerdings wird in den USA gerade die Berufsausbildung bei weitem nicht so umfassend wie in Deutschland behandelt. Aber auch in Europa verletzt sich ein Ungelernter bzw. ein nicht eingewiesener Mitarbeiter häufiger an Kreissägemaschinen als ein Facharbeiter. Ursachen sind in erste Linie das Nichteinhalten der Arbeitsschutz- und Sicherheitsvorschriften. So werden beispielsweise Schutzhauben, die das Sägeblatt abdecken, demontiert oder der beim Bearbeiten schmaler Werkstücke zwingend vorgeschriebene Schiebestock, der die Hand aus dem Gefahrenbereich des Sägeblattes hält, nicht verwendet. Aber auch Ablenkung und Unaufmerksamkeit des Bedienpersonals beim Arbeiten kann zu einem Kontakt der Hand mit dem Sägeblatt führen, der in der Regel bei schnellen Bewegungsvorgängen zu schweren Verletzungen führt.

Insbesondere aufgrund der Schwere der Verletzung im Falle eines Unfalls mit Kreissägen werden verschiedene Bemühungen unternommen, um den Benutzer vor Verletzung zu schützen.

So ist aus US 2002/0170399A1 ein System bekannt, bei dem ein Kontakt zwischen Haut und Kreissägeblatt durch eine elektrische Leitfähigkeitsmessung über eine am Sägeblatt anliegende elektrische Spannung zu detektieren und auf diese Weise einen Gefahrenzustand zu erfassen und mit dem solcherart gewonnenen Signal eine vorgespannte Feder zu entspannen und mit der Federkraft ein Kunststoffelement in die Schneide des Sägeblatts zu drücken. Auf diese Weise wird einerseits eine Abbremsung des Sägeblatts erreicht. Da jedoch diese Abbremsung nicht ausreichend wäre, um die bereits im Kontakt mit dem Sägeblatt befindliche Haut vor einer ernsthaften Verletzung zu schützen, wird das durch die Abbremsung ausgelöste Moment dazu benutzt, das Sägeblatt von der Hand des Benutzers unter den Auflagetisch der Kreissäge wegzuziehen. Zu diesem Zweck sind Sägeblatt und Antriebsmotor auf einer Wippe befestigt, um deren Drehpunkt das Bremsmoment wirkt und das Kreissägeblatt aus dem verletzungsgefährdenden Bereich verschwenkt. Details zu diesem Stand der Technik sind in US2004/0173430A1, US2005/0139057A1 und US2005/0139058 offenbart.

Das solcherart arbeitende System kann zwar in einigen Anwendungsfällen, insbesondere im Zusammenhang mit kleineren Kreissägen, d.h. Kreissägen mit einem kleinen Kreissägeblatt und einer leichten Antriebseinheit, den Benutzer zuverlässig vor Verletzungen schützen. Es hat sich jedoch gezeigt, dass insbesondere bei größeren und schwereren Kreissägen dieses System keinen zuverlässigen Schutz des Benutzers erlaubt.

Aus WO2004/101239 ist ein Sicherheitssystem bekannt, bei dem in einer Gefahrensituation das Sägeblatt unter den Tisch gezogen wird oder der Antrieb vom Sägeblatt entkoppelt wird, um eine Abbremsung des Sägeblatts durch das Werkstück zu erzielen, Auch dieses System eignet sich nur für leichte, kleine Kreissägen und kann nicht zuverlässig vor Verletzungen an schwereren Kreissägen schützen

Ein erstes Problem der bekannten Systeme besteht darin, dass die Zeit, innerhalb der die Schneidwirkung am Gefährdungsort unterbunden werden kann, nicht ausreicht, um bei schnellen Vorschubgeschwindigkeiten des Werkstücks und damit der Hand des Benutzers relativ zum Kreissägeblatt eine schwerwiegende Verletzung zu vermeiden.

Die bekannten Vorrichtungen weisen weiterhin den Nachteil auf, dass sie nur bei dem Schneiden elektrisch isolierender Werkstücke funktionieren, nicht jedoch beim Schneiden elektrisch leitender Werkstoffe, wie beispielsweise Leichtmetallen oder dergleichen.

Ein weiterer Nachteil der bekannten Vorrichtungen ist, dass das Kreissägeblatt durch den schlagartigen Abbremsvorgang beschädigt werden könnte und aus dem Kreissägeblatt herausbrechende Fragmente, sei es beim Bremsvorgang selbst oder in Folge einer beim Bremsvorgang verursachten Vorschädigung und dem darauf folgenden weiteren Benutzen des vorgeschädigten Kreissägeblatts, eine zusätzliche Verletzungsquelle erzeugt wird.

Ein grundsätzliches funktionelles Problem der bekannten Systeme besteht darin, dass das für die Funktion erforderliche Schwenkmoment nur mit Kreissägeblättern mit positiven Spanwinkeln erzeugt wird. Nun ist es einerseits üblich, den positiven Spanwinkel für eine Reihe von Anwendungsfällen in einem bestimmten Bereich zu variieren, wodurch die Funktionsweise und insbesondere die Geschwindigkeit des Wegtauchens des Kreissägeblatts variiert und in bestimmten Fällen nicht mehr ausreichend schnell sein kann. Darüber hinaus ist es jedoch für die Bearbeitung einer Reihe von Werkstoffen üblich und vorteilhaft, Kreissägeblätter mit negativem Spanwinkel zu verwenden, bei denen das funktionell erforderliche Moment überhaupt nicht oder nur in sehr schwacher Weise erzeugt wird, so dass in diesem Fall das Kreissägeblatt nicht aus dem Gefahrenbereich geschwenkt würde.

Schließlich haben die bekannten Systeme den Nachteil, dass bei schweren Kreissägen, wie beispielsweise industriell genutzten Formatkreissägen, die Masse der Antriebsvorrichtung des Sägeblatts und des Sägeblatts selbst sowie der aufwendigen präzisen Lagerung zu hoch ist, um eine ausreichend schnelle Verschwenkung der Wippe zu erreichen.

Es ist weiterhin versucht worden, die unwillkürliche Reaktion eines Benutzers bei Kontakt mit Hochspannung führenden Teilen als Sicherheitsvorkehrung zu nutzen, indem das Kreissägeblatt unter Hochspannung gesetzt wird. In der Praxis hat sich aber gezeigt, dass durch die Hochspannung ein zusätzliches Gefährdungspotential entsteht und zudem die unwillkürliche Reaktion des Benutzers bei Kontakt mit dem Sägeblatt nicht zwangsläufig eine verietzungsvermeidende Ausweichbewegung sein muss.

Der Erfindung liegt nun die Aufgabe zugrunde, eine Sicherheitsvorrichtung bereitzustellen, welche zuverlässig auch bei industriell genutzten größeren Formatkreissägen den Benutzer vor Verletzungen durch das Kreissägeblatt schützen kann.

Diese Aufgabe wird erfindungsgemäß gelöst, indem die Schneidstoppvorrichtung eine Bremsvorrichtung mit einer Bremsscheibe umfasst, die mit dem Kreissägeblatt zur Übertragung eines Drehmoments verbunden ist und mit zumindest einem Bremskörper, der so ausgebildet ist, dass er in einer ersten Position nicht im Bremseingriff mit der Bremsscheibe ist, und in einer zweiten Position im Bremseingriff mit der Bremsscheibe ist und in dieser zweiten Position durch die Reibkraft zwischen Bremsscheibe und Bremskörper eine selbstverstärkend Flächenpressungskraft und hieraus resultierende tribologische Bremskraft auf die Bremsscheibe ausübt.

Die erfindungsgemäße Ausführungsform weist einen ersten wichtigen Vorteil gegenüber dem Stand der Technik auf, indem die Bremskraft auf eine mit dem Kreissägeblatt gekoppelte Bremsscheibe aufgebracht wird und hierdurch die Gefahr einer Beschädigung des Kreissägeblatts erheblich verringert wird. Weiterhin wird hierdurch ermöglicht, dass eine sorgfältige Abstimmung und Optimierung der Bremsscheibe, insbesondere ihres Materials und Oberfläche, im Hinblick auf die Erzielung einer maximalen Bremskraft erfolgt, was beim Einbringen der Bremskraft direkt in das Kreissägeblatt nicht möglich wäre.

Ein weiterer wichtiger Vorteil der erfindungsgemäßen Vorrichtung ist die selbstverstärkende Bremswirkung. Unter selbstverstärkend soll im Zusammenhang mit der Erfindung ein funktioneller Effekt verstanden werden, der dazu führt, dass durch die typischerweise in radialer Richtung zur Bremsscheibe wirkende tribologische Bremskraft die Flächenpressurigskraft des Bremskörpers an die Bremsscheibe, die typischerweise in axialer Richtung zur Bremsscheibe wirkt, erhöht wird. Da zwischen der Flächenpressungskraft und der tribologischen Bremskraft ein Zusammenhang mit dem Reibungskoeffizienten als Faktor besteht, kann durch diese Selbstverstärkung eine für den gewünschten Zweck sehr vorteilhafte erhebliche Erhöhung der Bremswirkung und somit Verkürzung der Bremszeit erreicht werden. Es hat sich gezeigt, dass mit einer solcherart ausgeführten Sicherheitsvorrichtung auch bei Formatkreissägen mit einem Kreissägeblatt mit großem Durchmesser und folglich hohem Massenträgheitsmoment und dem hierzu korrespondierenden großdimensionierten Antrieb eine ausreichend schnelle Abbremsung erreicht werden kann, um den Benutzer vor Verletzungen zu schützen.

Es ist besonders bevorzugt, dass der Bremskörper ein bewegliches Bremsreibelement umfasst, das zwischen der Bremsscheibe und einem Führungselement geführt wird, wobei Bremsscheibe, Bremsreibelement und Führungselement so angeordnet und ausgebildet sind, dass die Reibkraft zwischen Bremsscheibe und Bremsreibelement in der zweiten Position das Bremsreibelement in eine Richtung bewegt, in welcher sich der für das Reibelement zwischen Bremsscheibe und Führungselement verbleibende Spalt verringert. Mit dieser Ausführungsform wird eine aufgrund der Geometrie von Bremsreibelement, Bremsscheibe und Führungselement erreichte Selbstverstärkungswirkung erzielt. Die Verringerung des für das Reibelement verbleibenden Spaltes kann dabei auf verschiedene Art und Weise erfolgen. Einerseits kann, bei geometrisch über die Länge des Spaltes gleichbleibendem unverändertem Spaltmaß das Reibelement solcherart ausgebildet sein, dass es bei der durch die Bremsreibkraft erzeugten Bewegung ein zunehmend größeres Spaltmaß benötigt, sei es durch thermische Dehnung oder durch geometrische Gestaltung des Bremsreibelements oder andere Maßnahmen. Alternativ oder zusätzlich hierzu könnte der Spalt zwischen Führungselement und Bremsscheibe sich in Richtung der durch die Bremsreibkraft erzeugten Bewegung des Reibelements verjüngen, so dass auf diese Weise die Anpresskraft erhöht wird.

Es ist weiterhin bevorzugt, dass sich der verbleibende Spalt verringert indem sich das Spaltmaß zwischen der Bremsscheibe und dem Führungselement in der Richtung, in der das Bremselement durch die Reibkraft bewegt wird, verringert und/oder indem sich das zwischen der Bremsscheibe und dem Führungselement ausgebildete Querschnittsmaß des Bremsreibelements in dieser Richtung verringert. Mit diesen Maßnahmen kann das Spaltmaß bzw. Querschnittsmaß, die sich jeweils in axialer Richtung zur Bremsscheibe erstrecken, durch die Bewegung des Bremsreibelements verringert werden und auf diese Weise die Selbstverstärkung erzielt werden. Dabei ist diese Spaltmaß- bzw. Querschnittsmaßverringerung so zu verstehen, dass sie an der Stelle der aus der Flächenpresskraft zwischen Bremsreibelement und Bremsscheibe gemittelten und als Punktlast repräsentierten Anpresskraft gemessen wird, d.h. es handelt sich um ein Maß, welches sich während des Bremsvorgangs und der Selbstverstärkung verlagern oder welches an einer Winkelposition zur Bremsscheibe verharren kann.

Das Bremsreibelement ist bei der zweiten Variante zu Beginn des Bremsvorgangs mit einem Bereich im Kontakt zur Bremsscheibe, in dem ein niedriges Querschnittsmaß vorliegt und wird durch die Reibkraft in einer solchen Weise relativ zum Führungselement bewegt, dass im Verlauf des Bremsvorgangs Bereiche in Kontakt mit der Bremsscheibe kommen, in denen ein größeres Querschnittsmaß vorliegt, so dass, unter der Annahme, dass sich der zur Verfügung stehende Platz nicht verändert, eine erhöhte Flächenpressungskraft und daraus folgend eine erhöhte Reibkraft ergibt. Die Zunahme des Querschnittsmaßes entgegen der Bewegungsrichtung bzw. die Verringerung des Querschnittsmaßes in Bewegungsrichtung kann dabei linear, progressiv, exponentiell oder degressiv erfolgen.

Bei der ersten Variante wird der Selbstverstärkungseffekt durch eine bestimmte geometrische Ausgestaltung des Spaltes zwischen Führungselement und Bremsscheibe erreicht. Dabei befindet sich das Bremsreibelement zu Anfang des Bremsvorgangs in einem Bereich, in dem ein großes Spaltmaß vorliegt und bewegt sich infolge der Reibkraft im Verlauf des Bremsvorgangs in einen Bereich, in dem ein niedriges Spaltmaß vorliegt. Diese Ausführungsform kann mit einem Bremsreibelement mit konstantem Querschnitt oder mit dem zuvor beschriebenen Bremsreibelement mit nicht-konstantem Querschnitt zusammenwirken, wobei sich in letzterem Fall die beiden geometrischen Effekte überlagern und zu einer sich addierenden Selbstverstärkung führen.

Weiterhin ist es insbesondere bevorzugt, wenn der Bremskörper ein bewegliches Bremsreibelement umfasst, das zwischen der Bremsscheibe und einem Führungselement geführt wird, und dass das Bremsreibelement und/oder der Spalt zwischen dem Führungselement und der Bremsscheibe keilförmig ist und sich in der Richtung verjüngt, in welche das Bremsreibelement durch die Reibkraft zwischen Bremsscheibe und Bremsreibelement bewegt wird. Eine keilförmige Ausgestaltung von Bremsreibelement bzw. Spalt erlaubt eine konstruktiv einfache und zuverlässige Realisierung der Selbstverstärkung. Der Keilwinkel ist dabei in Abhängigkeit der Reibungsverhältnisse, insbesondere des Reibkoeffizienten so zu wählen, dass die gewünschte Selbstverstärkung erzielt wird und zugleich Bremskräfte realisiert werden, die eine Überlastung der Vorrichtung oder anderer Teile der Kreissägemaschine vermeiden.

Es ist weiterhin bevorzugt, dass an einer Winkelposition der Bremsscheibe zwei sich gegenüberliegende Bremskörper zum beidseitigen Bremseingriff an der Bremsscheibe angeordnet sind. Bei dieser Ausführungsform wirkt eine beidseits und entgegengesetzt gerichtete Flächenpressurigskraft auf die Bremsscheibe, so dass keine nennenswerten axialen Kräfte auf die Lagerung der Bremsscheibe wirken. Insbesondere ermöglicht diese Ausführungsform eine schwimmende Lagerung der Bremsscheibe oder der beiden Bremskörper, um eine beidseits gleichmäßige Bremswirkung durch die beiden Bremskörper zu erzielen.

Die Erfindung kann weiter fortgebildet werden durch eine mittels eines Verriegelungselements in einer vorgespannten Lage verriegelte Druckfeder, die bei Entriegelung den Bremskörper aus der ersten in die zweite Position bewegt. Diese Ausführungsform ermöglicht eine nahezu verzögerungsfreie und mechanisch robuste Auslösung des Bremsvorgangs.

Dabei ist es insbesondere bevorzugt, wenn eine pyrotechnische Ladung, die mit der Steuerungsvorrichtung verbunden ist um durch diese gezündet zu werden und die so mit dem Verriegelungselement gekoppelt ist, dass bei Zündung das Verriegelungselement entriegelt wird, bereitgestellt wird. Eine pyrotechnische Ladung hat den Vorteil, dass sie in einfacher Weise durch eine elektrische Steuerungsvorrichtung gezündet werden kann und nahezu verzögerungsfrei die Auslösung des Bremsvorgangs initiieren kann.

Weiterhin ist bei den beiden zuvor beschriebenen Ausführungsformen bevorzugt, wenn die erfindungsgemäße Vorrichtung fortgebildet wird durch einen Kolben, der längsverschieblich in einem Zylinderraum angeordnet ist und mit dem Bremskörper verbunden ist, und durch einen Verbindungskanal zum Leiten der Verbrennungsgase einer oder der pyrotechnischen Ladung in den Zylinderraum, um bei Zündung der pyrotechnischen Ladung den Bremskörper mittels des Kolbens aus der ersten in die zweite Position zu bewegen. Mit dieser Ausführungsform wird die durch die pyrotechnische Ladung entwickelte Gaskraft vorteilhaft für die Bewegung des Bremskörpers bzw. eines Elements des Bremskörpers genutzt. Dabei kann die pyrotechnische Ladung entweder ausschließlich für diese Kraftwirkung genutzt werden oder in doppelter Funktion sowohl für die Krafteinwirkung auf den Bremskörper genutzt werden als auch für die Entriegelung des Verriegelungselements, wodurch die Kraft einer vorgespannten Druckfeder ergänzend für die Bewegung des Bremskörpers aus der ersten in die zweite Position genutzt werden kann und folglich eine äußerst kurze Auslösezeit erzielt werden kann.

Schließlich ist es insbesondere bevorzugt, wenn die Bremsscheibe drehmomentfest an einer Welle befestigt ist, an der auch das Kreissägeblatt drehmomentfest befestigt ist. Grundsätzlich ist es erstrebenswert, die von der Bremsscheibe ausgehende Bremswirkung möglichst direkt auf das Kreissägeblatt zu übertragen und hierbei möglichst geringe Massenträgheitsmomente überwinden zu müssen. Zur Realisierung dieses Ziels ist es günstig, die Bremsscheibe möglichst unmittelbar benachbart zum Kreissägeblatt anzuordnen. Insbesondere ist zu vermeiden, dass zwischen Bremsscheibe und Kreissägeblatt drehmomentübertragende Elemente eingesetzt sind, welche bei Übertragung des Bremsmoments Schlupf zulassen würden.

Gemäß einer weiteren bevorzugten Ausführungsform der erfindungsgemäßen Vorrichtung umfasst die Sensorvorrichtung ein Sensorsystem mit zumindest einer Bilderfassungsvorrichtung für Licht im sichtbaren Bereich, ein Sensorsystem mit zumindest einem Infrarotsensor, und/oder ein Sensorsystem mit zumindest einem kapazitiven Sensor. Grundsätzlich kann mit jedem dieser Sensorsysteme eine besonders bevorzugte Detektion eines gefährdeten Körperteils eines Benutzers im Gefahrenbereich erfolgen. So kann mit Hilfe der Bilderfassungsvorrichtung eine Differenzierung zwischen den bearbeiteten Bauteilen und den Körperteilen des Benutzers durch Bildverarbeitung erfolgen und folglich die Annäherung eines Körperteils an den Gefahrenbereich oder das Eintreten in den Gefahrenbereich detektiert werden und die Aktivierung der erfindungsgemäßen Bremsvorrichtung veranlasst werden. Ein mit einem oder mehreren Infrarotsensoren versehenes Sensorsystem ermöglicht die Differenzierung zwischen Werkstück und dem gefährdeten Körperteil aufgrund der Körperwärme des Benutzers. Schließlich kann ein Sensorsystem mit kapazitiven Sensoren die unterschiedlichen dielektrischen Eigenschaften von Hand und Holz für die Detektion eines Gefahrzustands nutzen, um die erfindungsgemäße Bremsvorrichtung zu aktivieren.

Dabei ist es gemäß einer besonders bevorzugten Vorrichtung vorgesehen, dass die Sensorvorrichtung zumindest zwei, vorzugsweise alle drei vorgenannten Sensorsysteme umfasst und die Steuerungsvorrichtung einen Speicher für Vertrauenswerte, eine Zuordnungsvorrichtung zum Zuordnen eines vorbestimmten Vertrauenswert zu jedem Signal der Sensorsysteme und eine Auswerteeinheit zum Ermitteln eines Gefährdungszustands aus den mit den Vertrauenswerten gewichteten Sensorsignalen umfasst.

Einerseits besteht ein erfindungsgemäßer Aspekt darin, dass die erfindungsgemäße Sensorvorrichtung zwei oder mehr Sensorsysteme zugleich aufweist und aus den von diesen mehreren Sensorsystemen ermittelten Daten einen Gefahrzustand detektiert. Auf diese Weise können einzelne Detektionsschwachstellen der Sensorsysteme kompensiert werden und eine insgesamt zuverlässigere Anzeige eines Gefahrzustands erreicht werden als wenn ein einziges Sensorsystem verwendet wird. Die zuvor beschriebene Fortbildung der Erfindung befasst sich dabei gemäß eines zweiten Aspekts insbesondere damit, wie die Daten der mehreren eingesetzten Sensorsysteme so zusammengeführt werden, dass aus den Daten eine gemeinsame Aussage über den Gefährdungszustand getroffen werden kann. Hierzu wird erfindungsgemäß vorgeschlagen, jedem Signal der Sensorsysteme einen Vertrauenswert zuzuweisen, der ein Maßstab dafür ist, wie hoch die Wahrscheinlichkeit ist, dass durch das Signal tatsächlich eine Gefährdung angezeigt wird. Der Vertrauenswert kann einerseits in Abhängigkeit der Anordnung des Sensors, der Umgebungseinflüsse des Sensors und der empirisch ermittelten Zuverlässigkeit des Sensors vorherbestimmt werden und als permanenter Wert im Speicher abgelegt sein. Andererseits ist es in vielen Anwendungen vorteilhaft, die Vertrauenswerte in Abhängigkeit des Betriebszustands der Kreissäge und/oder in Abhängigkeit der Daten der übrigen Sensorsysteme zu modifizieren. So kann beispielsweise dann, wenn ein erstes Sensorsystem einen potentiellen Gefährdungszustand detektiert, in dem ein zweites Sensorsystem eine hohe Sensibilität auf eine tatsächliche Gefährdung aufweist, der Vertrauenswert dieses zweiten Sensorsystems hochgesetzt werden, um der spezifischen potentiellen Gefährdungssituation gerecht zu werden.

Auf diese Weise kann durch eine logische Verarbeitung der Daten der einzelnen Sensorsysteme und eine Anpassung der Vertrauenswerte in Echtzeit an die Betriebszustände eine hochpräzise und in allen Gefährdungssituationen dem tatsächlichen Zustand entsprechende Erfassung eines Gefährdungszustands erreicht werden.

Weiterhin ist es bevorzugt, wenn die Sensorvorrichtung ein Sensorsystem mit zumindest einer Bilderfassungsvorrichtung für Licht im sichtbaren Bereich umfasst und die Steuerungsvorrichtung eine Bildverarbeitungseinrichtung umfasst, mit der ein gefährdeter Körperteil des Benutzers, insbesondere die Fingerspitzen, erkannt, verfolgt und lokalisiert werden können. Die solcherart vorgesehen Bilderfassungs- und Bildverarbeitungseinrichtung ermöglicht eine besonders zuverlässige und von störenden Fremdeinflüssen weitestgehend freie Detektion eines Gefährdungszustands. Die Bilderfassungsvorrichtung kann dabei eine oder mehrere CMOS- oder CCD-Kameras umfassen, die in den Gefährdungsbereich gerichtet sind, oder um den Gefährdungsbereich angeordnet sind und das Umfeld des Gefährdungsbereichs abbilden.

Schließlich ist es weiterhin bevorzugt, die erfindungsgemäße Vorrichtung fortzubilden, indem die Sensorvorrichtung alle drei vorgenannten Sensorsysteme umfasst und die Steuerungsvorrichtung die zuvor beschriebenen Baugruppen umfasst, um die Sensorsignale des infraroten und kapazitiven Sensorsystems gewichtet auszuwerten, und die Bilderfassungsvorrichtung im sichtbaren Bereich auf ein Gebiet vor dem Gefahrenbereich ausgerichtet ist, um eine Vorfeldüberwachung durchzuführen und das Vorhandensein eines Benutzers zu detektieren. Diese Art der Kombination der unterschiedlichen Sensorsysteme hat sich als besonders sensibel gegenüber allen in der Praxis auftretenden Gefährdungszuständen erwiesen und erlaubt eine Auslösung der erfindungsgemäßen Bremsvorrichtung mit einem vertretbaren Rechenaufwand und mit sehr kurzen Auslösezeiten.

Ein weiterer Aspekt der Erfindung ist eine Sensorvorrichtung für eine Sicherheitsvorrichtung der zuvor beschriebenen Art, umfassend ein Sensorsystem mit zumindest einer Bilderfassungsvorrichtung für Licht im sichtbaren Bereich, ein Sensorsystem mit zumindest einem Infrarotsensor, und/oderein Sensorsystem mit zumindest einem kapazitiven Sensor, und eine Steuerungsvorrichtung, welche mit der Sensorvorrichtung gekoppelt und einer Schneidstopvorrichtung koppelbar ist und derart ausgebildet ist, dass die Schneidstoppvorrichtung aktiviert wird, wenn die Sensorvorrichtung einen Körperteil im Gefahrenbereich detektiert,

Die Sensorvorrichtung kann dabei insbesondere fortgebildet werden, wie zuvor im Zusammenhang mit der erfindungsgemäßen Sicherheitsvorrichtung beschrieben.

Noch ein weiterer Aspekt der erfindungsgemäßen Vorrichtung ist eine Schneidstoppvorrichtung für eine Sicherheitsvorrichtung der zuvor beschriebenen Art, umfassend eine Bremsvorrichtung mit einer Bremsscheibe, die mit einem Kreissägeblatt zur Übertragung eines Drehmoments verbindbar ist und mit zumindest einem Bremskörper, der so ausgebildet ist, dass er in einer ersten Position nicht im Bremseingriff mit der Bremsscheibe ist, und in einer zweiten Position im Bremseingriff mit der Bremsscheibe ist und in dieser zweiten Position durch die Reibkraft zwischen Bremsscheibe und Bremskörper eine selbstverstärkende Flächenpressungskraft und hieraus resultierende tribologische Bremskraft auf die Bremsscheibe ausübt.

Die erfindungsgemäße Schneidstoppvorrichtung kann insbesondere fortgebildet werden, wie zuvor im Zusammenhang mit der erfindungsgemäßen Sicherheitsvorrichtung, insbesondere deren Bremsvorrichtung, beschrieben.

Die erfindungsgemäßen Vorrichtungen arbeiten vorzugsweise nach einem Verfahren zur Vermeidung von Arbeitsunfällen an Kreissägen, mit den Schritten: Detektieren eines Körperteils eines Benutzers in einem Gefahrenbereich mittels einer Sensorvorrichtung, Verhindem einer Schneidwirkung eines Kreissägeblatts der Kreissäge im Gefahrenbereich mittels einer Schneidstoppvorrichtung, und Aktivieren der Schneidstoppvorrichtung, wenn die Sensorvorrichtung einen Körperteil im Gefahrenbereich detektiert, wobei bei Aktivieren der Schneidstoppvorrichtung ein Bremskörper aus einer ersten Position, in der er nicht im Bremseingriff mit einer mit dem Kreissägeblatt zur Übertragung eines Drehmoments verbundenen Bremsscheibe ist in eine zweiten Position im Bremseingriff mit der Bremsscheibe bewegt wird und in dieser zweiten Position durch die Reibkraft zwischen Bremsscheibe und Bremskörper eine selbstverstärkende Flächenpressungskraft und hieraus resultierende tribologische Bremskraft auf die Bremsscheibe ausübt.

Das Verfahren kann fortgebildet werden, indem der Bremskörper durch Lösen der Verriegelung einer mittels eines Verriegelungselements vorgespannt verriegelten Druckfeder aus der ersten in die zweite Position bewegt wird.

Das Verfahren kann weiter fortgebildet werden, indem der Bremskörper durch eine pyrotechnische Ladung aus der ersten in die zweite Position bewegt wird, insbesondere indem durch die pyrotechnische Ladung das Verriegelungselement entriegelt wird.

Das Verfahren kann noch weiter fortgebildet werden, indem mittels der Sensorvorrichtung Licht im sichtbaren Bereich, Strahlung im infraroten Bereich, und/oder Änderungen der dielektrischen Eigenschaften erfasst werden.

Das Verfahren kann weiter fortgebildet werden, indem die Sensorvorrichtung zumindest zwei, vorzugsweise alle drei vorgenannten Erfassungsweisen umfasst und jedem der erfassten Signale ein Vertrauenswert zugeordnet wird, und der Gefährdungszustands aus den mit den Vertrauenswerten gewichteten Sensorsignalen ermittelt wird.

Schließlich kann das Verfahren noch weiter fortgebildet werden, indem das Licht im sichtbaren Bereich mit einer Bilderfassungvorrichtung aus einem Gebiet vor dem Gefahrenbereich erfasst wird, um eine Vorfeldüberwachung durchzuführen und das Vorhandensein eines Körperteils eines Benutzers zu detektieren.

Eine bevorzugte Ausführungsform wird anhand der anhängenden Figuren beschrieben. Es zeigen:
- Fig. 1:: Eine perspektivische Ansicht einer erfindungsgemäßen Bremsvorrichtung von schräg oben,
- Fig. 2:: Eine Draufsicht in schematischer Darstellung der Auslöseeinheit für die erfindungsgemäße Bremsvorrichtung,
- Fig. 3:: Eine schematische perspektivische Ansicht des Standtisches einer Formatkreissäge mit darüber angeordneter Schutzhaube und eingebauter erfindungsgemäßer Sicherheitsvorrichtung,
- Fig. 4:: Eine Ausschnittsvergrößerung des Bereichs der erfindungsgemäßen Sicherheitsvorrichtung und Schutzhaube gemäß Fig. 3,
- Fig. 5:: Eine perspektivische, teiltransparente schematische Ansicht einer Schutzhaube, die gemäß der Erfindung weitergebildet ist,
- Fig. 6a:: Eine Seitenansicht der Schutzhaube gem. Fig. 5,
- Fig. 6b:: Eine Frontalansicht der Schutzhaube gemäß Fig. 5,
- Fig. 6c:: Eine Draufsicht der Schutzhaube gemäß Fig. 5,
- Fig. 7:: Eine Draufsicht auf die Schutzhaube gemäß Fig. 5 mit schematisch umrissenem Vorfeld zur Handerkennung,
- Fig. 8a:: Eine Detailseitenansicht einer Lamelle der erfindungsgemäß fortgebildeten Schutzhaube, und
- Fig. 8b:: Eine Draufsicht der Lamelle gemäß Fig. 8a.

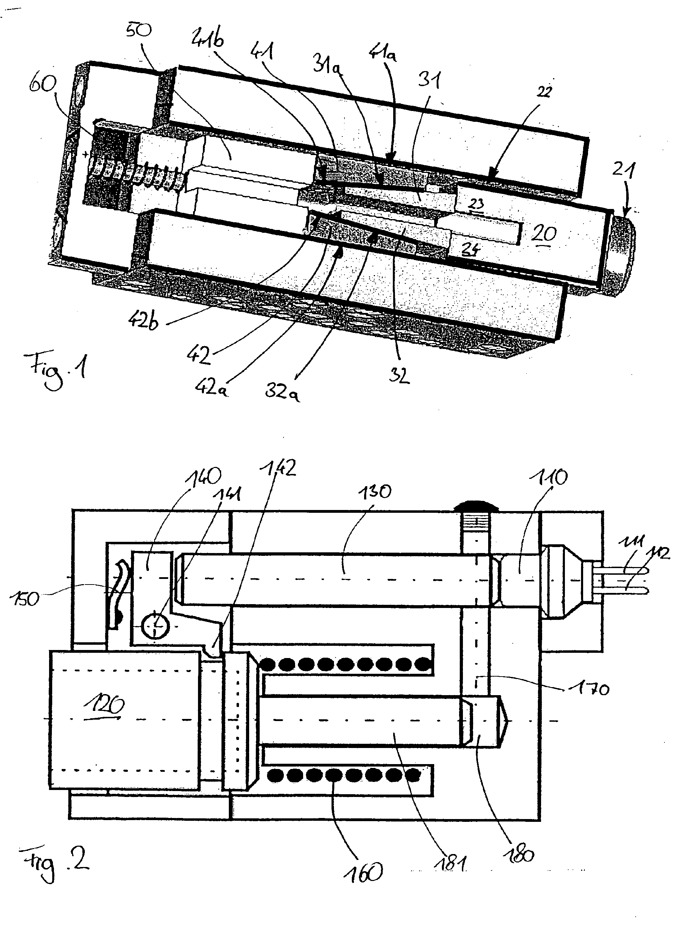

Bezugnehmend auf Fig. 1 umfasst die erfindungsgemäße Bremsvorrichtung ein aus massiven Platten zusammengesetztes Gehäuse 10, welches einen inneren Raum teilweise umschließt.

Der innere Raum des Gehäuses 10 erstreckt sich in Längsrichtung des Gehäuses 10 und diese Längsrichtung liegt radial und etwa tangential zu einer mit der Bremsvorrichtung abzubremsenden Bremsscheibe (nicht dargestellt).

In dem inneren Raum des Gehäuses 10 ist ein bewegliches Übertragungselement 20 angeordnet, welches an einem ersten Ende 21 zylindrisch ausgebildet ist und an einem zweiten Ende 22 gabelförmig mit zwei parallelen Gabelzinken 23,24 ausgebildet ist.

Die beiden Gabelzinken 23,24 stehen in direktem Kontakt mit zwei keilförmigen Bremsreibelementen 31,32. Diese Bremsreibelemente sind spiegelsymmetrisch um eine sich in Längsrichtung des Gehäuses 10 erstreckende Mittelebene angeordnet und zwischen den beiden Bremsreibelementen 31,32 ist ein Spalt, in dem die abzubremsende Bremsscheibe mit einem äußeren Umfangsbereich läuft. Die zur Bremsscheibe weisenden Flächen der beiden Bremsreibelemente sind planparallel zur Oberfläche der Bremsscheibe. Die beiden von der Bremsscheibe weg weisenden Flächen 31a,32a der Bremsreibelemente sind geneigt zu den zur Bremsscheibe weisenden Flächen angeordnet, wodurch die Bremsreibelemente insgesamt keilförmig sind und sich ausgehend von der Kontaktfläche zum gabelförmigen Übertragungselement 20 in Längsrichtung des Schlitzes für die Bremsscheibe verjüngen.

Zwischen der Gehäusewand und den Bremsreibelementen 31,32 ist ein jeweiliges Führungselement 41,42 angeordnet, das sich mit seiner jeweils äußeren Fläche 41a,42a an der inneren Gehäusewand abstützt. Die zum Inneren des Gehäuses weisenden Flächen 41b,42b sind gegenüber den äußeren Flächen 41 a,42a geneigt und verjüngen sich entgegengesetzt zu der Verjüngungsrichtung der Bremsreibelemente 31,32, d.h. ausgehend von der Seite des gabelförmigen Übertragungselements 20 in Richtung nach links in Fig. 1 erweitert sich das Querschnittsmaß der Führungselemente 41,42. Der Neigungswinkel der Flächen 41b,42b entspricht dem Neigungswinkel der Flächen 31a,32a. Die Flächen 31a,32a stützen sich auf den Flächen 41 b,42b ab, so dass aufgrund der entgegengesetzten Keilform der Bremsreibelemente 31,32 und der Führungselemente 41,42 und der übereinstimmenden aber entgegensetzten Neigungswinkel der Kontaktflächen die nach innen weisenden Reibflächen der Bremsreibelemente 31,32 und die nach außen weisenden Kontaktflächen der Führungselemente 41,42 zum Gehäuse parallel zueinander liegen.

Die Führungselemente 41,42 stützen sich an ihrem dem gabelförmigen Übertragungselement 20 gegenüberliegenden Ende an einem Einstellelement 50 ab, welches in Flucht mit dem Spalt zwischen den Bremsreibelementen 31,32 einen Schlitz aufweist, in dem die Bremsscheibe laufen kann. Das Einstellelement 50 kann mittels einer Spindel 60 in Längsrichtung des Hohlraums im Gehäuse 10 verschoben werden, um hierdurch die Führungselemente 41,42 zu verschieben und auf diese Weise durch die Keilwirkung den Spalt für die Bremsscheibe und hiermit den Totgang der Bremsvorrichtung einstellen zu können.

In Fig. 2 ist die Auslösevorrichtung für die in Fig. 1 gezeigte Bremsvorrichtung schematisch abgebildet. In Zusammenschau ist zu verstehen, dass das zylindrische Ende 21 des gabelförmigen Übertragungselements 20 der in Fig. 1 gezeigten Bremsvorrichtung an ein Aktuatorübertragungselement 120 der in Fig. 2 gezeigten Auslösevorrichtung gekoppelt ist, um die Auslösung zu bewirken.

Die Auslösevorrichtung umfasst eine pyrotechnische Ladung 110, die mittels elektrischer Leitungen 111,112 ausgelöst wird.

Angrenzend an die pyrotechnische Ladung 110 ist in einem Führungskanal eine Druckstange 130 längsverschieblich angeordnet, die an einem Ende an die pyrotechnische Leitung 110 grenzt und an ihrem anderen Ende mit geringem Abstand zu einem Klinkenhebel 140 angeordnet ist. Der Klinkenhebel 140 ist um eine Schwenkachse 140 verschwenkbar und wird durch ein federndes Element, beispielsweise eine Blattfeder 150 in der in Fig. 2 gezeigten eingerasteten Stellung vorgespannt. Eine Zahnklinke 142 des Klinkenhebels 140 greift in eine Ringnut des Aktuatorübertragungselements 120 ein und hält das Aktuatorübertragungselement 120 dadurch entgegen der Druckkraft einer vorgespannten Spiralfeder 160 fest. Das Aktuatorübertragungselement 120 und die vorgespannte Druckfe- ._ ; der 160 sind koaxial zueinander angeordnet_

Die Druckstange 130 verschließt an ihrem zur pyrotechnischen Ladung 110 weisenden Ende einen Gaskanal 170 auf, der in einen Zylinderraum 180 mündet. Im Zylinderraum 180 ist eine als Kolben 81 wirkende Stange verschieblich angeordnet, die an einem Ende an dem Aktuatorübertragungselement 120 anliegt und am anderen Ende den Zylinderraum 180 freifässt. Der Gasübertragungskanal 170 ist an seinem anderen, vom Zylinderraum 180 weg weisenden Ende verschlossen.

Die Funktionsweise der erfindungsgemäßen Auslösevorrichtung ist wie folgt: Bei Detektion eines Gefahrzustandes wird die pyrotechnische Ladung 110 gezündet und bewegt hierdurch schlagartig die Druckstange 130 in der in Fig. 2 gezeigten Darstellung nach links, um den Klinkenhebel 140 um die Schwenkachse 141 zu verschwenken. Hierdurch kommt die Zahnklinke 142 außer Eingriff zur Ringnut und die vorgespannte Druckfeder 160 bewegt das Aktuatorübertragungselement 120 schlagartig nach links in der dargestellten Abbildung, wodurch die Bremsreibelemente 31,32 der Bremsvorrichtung in der in Fig. 1 dargestellten Abbildung ebenfalls nach links gedrückt werden und durch die Abstützung der keilförmigen Flächen 31a,32a an den keilförmigen Flächen 41b,42b nach innen gedrückt werden und sich fest an die Bremsscheibe anlegen.

Zugleich wird bei Bewegung der Druckstange 130 nach links der Gaskanal 170 freigegeben und die Verbrennungsgase der pyrotechnischen Ladung 110 gelangen in den Zylinderraum 180 und drücken den Kolben 181 nach links. Hierdurch wird die Kraft auf das Aktuatorübertragungselement 120 weiter erhöht, dessen Verzögerungszeit verkürzt und die resultierende Bremskraft weiter erhöht.

Schließlich ist weiter zu verstehen, dass sich der äußere Umfangsabschnitt der Bremsscheibe, der im Spalt zwischen den Bremsreibelementen 31,32 läuft, in der in Fig. 1 gezeigten Abbildung von rechts nach links bewegt und hierdurch aufgrund der Reibkraft zwischen den Bremsreibelementen 31,32 und der Bremsscheibe die Bremsreibelemente weiter nach links bewegt werden, wodurch die Anpresskraft aufgrund der Keilwirkung noch weiter erhöht wird.

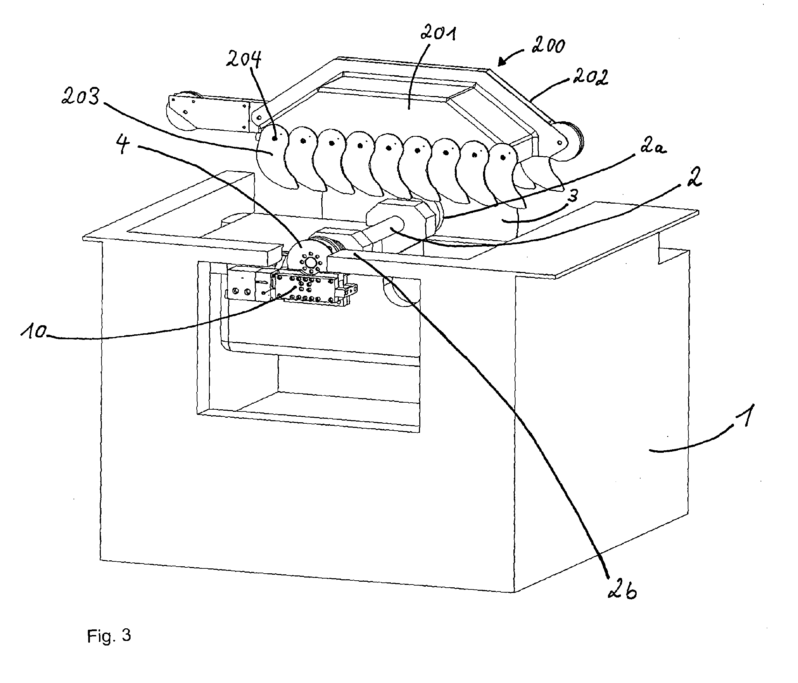

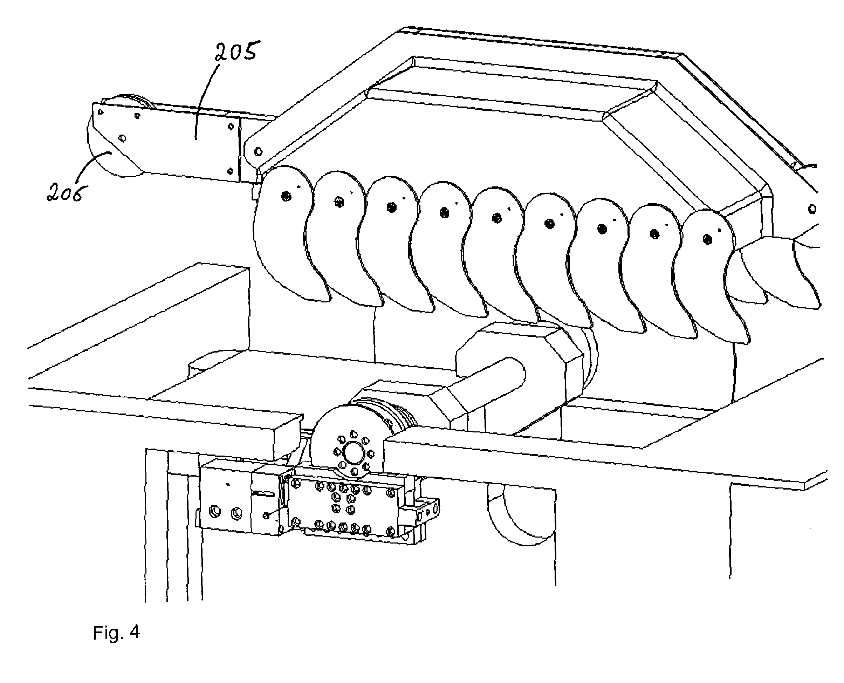

Fig. 3 und 4 zeigen eine Ansicht des Gesamtsystems. Ein Maschinentisch 1 nimmt in feststehenden Drehlagem eine Antriebswelle 2 auf, an derem einen Ende 2a ein radial und axial feststehendes, drehbares Kreissägeblatt 3 drehmomentfest befestigt ist. Am anderen Ende 2b der Antriebswelle 2 ist eine Bremsscheibe 4 drehmomentfest befestigt, die im Gehäuse 10 der erfindungsgemäßen Bremsvorrichtung läuft. Das Gehäuse 10 ist am Maschinentisch 1 befestigt.

Oberhalb des Maschinentisches 1 ist eine Schutzhaube 200 angeordnet, welche den oberen Abschnitt des Kreissägeblatts 3 umschließt. Die Schutzhaube 200 besteht aus seitlichen Wandelementen 201,202, an deren unteren Rand eine Vielzahl von Lamellen 203 befestigt sind, die sich beidseits vom Kreissägeblatt von der Schutzhaube in Richtung des Maschinentischs 1 erstrecken. Im ruhenden Zustand liegen die unteren Kanten der Lamellen 203 auf der Werkstückauflage (nicht abgebildet) auf, welche die Antriebswelle 2 überdeckt und eine horizontal liegende Fläche darstellt. Jede Lamelle 203 ist um eine Drehachse 204 schwenkbar an der Schutzhaube 200 gelagert und kann daher, wenn ein Werkstück in das Kreissägeblatt geschoben wird, so verschwenken, dass die Unterkante der Lamelle von der Werktischauflagefläche abhebt und über das Werkstück gleitet.

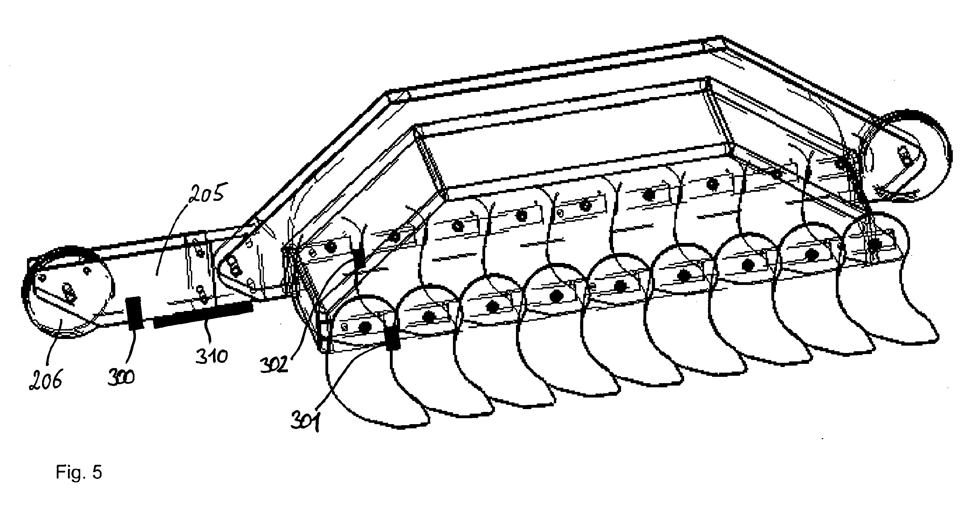

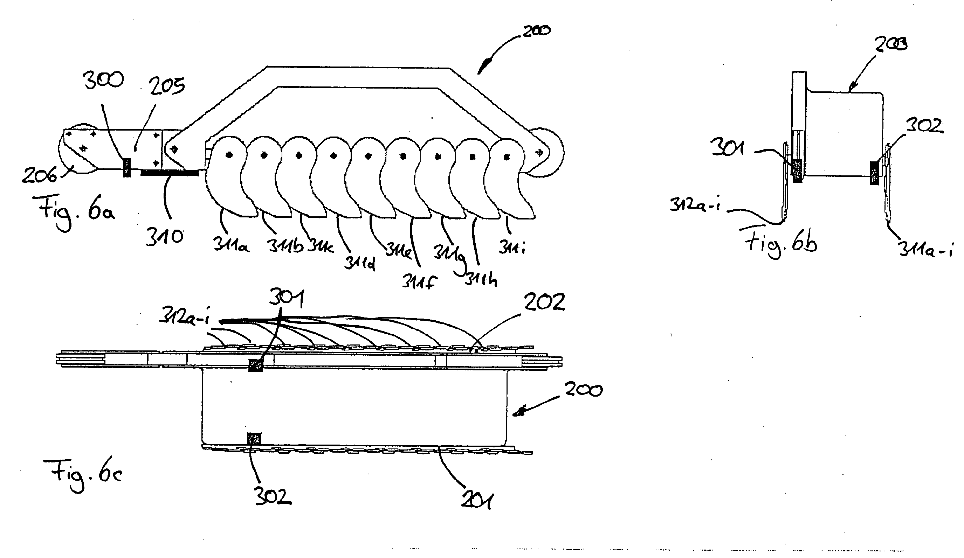

Die Schutzhaube ist zur Erkennung einer Gefährdungssituation mit einer Vielzahl von Sensoren bestückt, die anhand Fig. 5 und 6a-6c erläutert werden.

An ihrem entgegen der Werkstückzufuhrrichtung liegenden (in Fig. 5 linken) Ende weist die Schutzhaube 200 an einem Auslegearm 205 für eine Führungsrolle 206 einen Infrarotsensor 300 auf. In Werkstückzufuhrrichtung hinter diesem infrarotsensor 700 ist an der Unterseite des Auslegearms 205 ein erster kapazitiver Sensor 310 angeordnet. Im Bereich seitlich des Sägeblatts an den Schutzhaubenwänden 201 und 202 in Werkstückzufuhrrichtung vor der Drehachse des Kreissägeblatts sind zwei weitere Infrarotsensoren 301-302 angeordnet. Schließlich sind entlang der entgegen der Werkstückzufuhrrichtung weisenden Kante jeder Lamelle noch kapazitive Sensoren 311a-i und 312a-i angeordnet. Die Infrarotsensoren 300-302 sind in der Lage, eine Annäherung eines menschlichen Körperteils in den von der Schutzhaube umschlossenen Gefährdungsbereich des Kreissägeblatts zu detektieren. Die kapazitiven Sensoren 310-312i sind in der Lage, bei Kontakt mit einem menschlichen Körperteil durch Detektion der Änderung der dielektrischen Eigenschaften eine gefährliche Annäherung an das Kreissägeblatt zu detektieren.

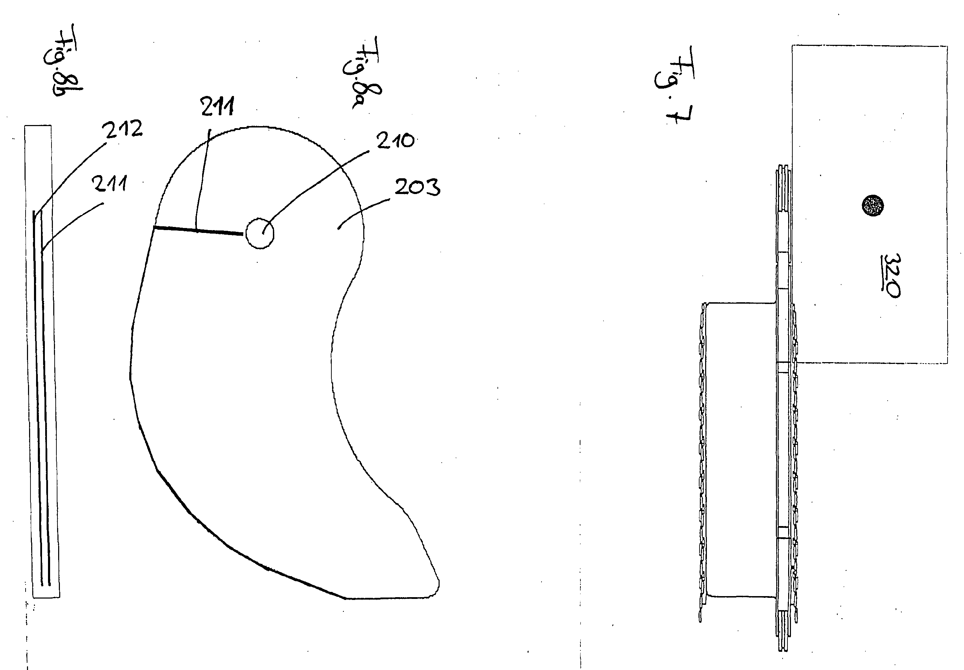

Fig. 7 zeigt die erfindungsgemäße Schutzhaube in einer Draufsicht mit Markierung eines Vorfeldbereichs 320, der durch eine Kamera überwacht wird. Der von der Kamera überwachte Vorfeldbereich ist rechteckig und erstreckt sich über einen Bereich, der in Werkstückzufuhrrichtung vor dem Kreissägeblatt und teilweise in Höhe des Kreissägeblatts angeordnet ist und der in Werkstückzufuhrrichtung gesehen links von der Kreissägeblattebene angeordnet ist. In diesem Bereich befindet sich typischerweise die Hand eines Benutzers der Formatkreissäge, wenn ein Werkstück dem Kreissägeblatt zugeführt wird.

Fig. 8a, b zeigen eine Detailaufnahme einer erfindungsgemäßen Lamelle 203 für die Schutzhaube. Die Lamelle weist eine Bohrung oder einen zylindrischen Stift 210 auf, mit der/dem die Lamelle schwenkbar an der Schutzhaube befestigt ist.

Ausgehend von der Bohrung/dem Stift 210 erstrecken sich zwei Leitungsdrähte 211,212 in Richtung der vorderen Kante, d.h. der Kante, die bei Zufuhr eines Werkstücks in Werkstückzufuhrrichtung zuerst mit dem Werkstück in Kontakt kommt. Die beiden Leitungsdrähte 211,212 verlaufen dann entlang der gebogenen vorderen Kante abwärts in Richtung der Maschinentischs 1 und sind parallel zueinander angeordnet und beabstandet voneinander. Die beiden Leitungsdrähte 211,212 werden über einen Kontakt innerhalb der Bohrung/dem Stift 210 mit der Steuerungseinheit für die erfindungsgemäße Sicherheitsvorrichtung verbunden.

## Patentansprüche

1. Sicherheitsvorrichtung zur Vermeidung von Arbeitsunfällen an Kreissägen, umfassend:
- eine Sensorvorrichtung zur Detektion eines Körperteils eines Benutzers in einem Gefahrenbereich,
- eine Schneidstoppvorrichtung zum schnellen Verhindern einer Schneidwirkung eines Kreissägeblatts der Kreissäge im Gefahrenbereich, und
- eine Steuerungsvorrichtung, welche mit der Sensorvorrichtung und der Schneidstopvorrichtung gekoppelt und derart ausgebildet ist, dass die Schneidstoppvorrichtung aktiviert wird, wenn die Sensorvorrichtung einen Körperteil im Gefahrenbereich detektiert,
**dadurch gekennzeichnet, dass** die Schneidstoppvorrichtung eine Bremsvorrichtung mit einer Bremsscheibe, die mit dem Kreissägeblatt zur Übertragung eines Drehmoments verbunden ist und mit zumindest einem Bremskörper, der so ausgebildet ist, dass er
- in einer ersten Position nicht im Bremseingriff mit der Bremsscheibe ist, und
- in einer zweiten Position im Bremseingriff mit der Bremsscheibe ist und in dieser zweiten Position durch die Reibkraft zwischen Bremsscheibe und Bremskörper eine selbstverstärkend Flächenpressungskraft und hieraus resultierende tribologische Bremskraft auf die Bremsscheibe ausübt.

2. Vorrichtung nach Anspruch 1,
**dadurch gekennzeichnet, dass** der Bremskörper ein bewegliches Bremsreibelement umfasst, das zwischen der Bremsscheibe und einem Führungselement geführt wird, wobei Bremsscheibe, Bremsreibelement und Führungselement so angeordnet und ausgebildet sind, dass die Reibkraft zwischen Bremsscheibe und Bremsreibelement in der zweiten Position das Bremsreibelement in eine Richtung bewegt, in welcher sich der für das Reibelement zwischen Bremsscheibe und Führungselement verbleibende Spalt verringert.

3. Vorrichtung nach Anspruch 2,
**dadurch gekennzeichnet, dass** sich der verbleibende Spalt verringert indem sich das Spaltmaß zwischen der Bremsscheibe und dem Führungselement in der Richtung, in der das Bremselement durch die Reibkraft bewegt wird, und/oder indem sich das zwischen der Bremsscheibe und dem Führungselement ausgebildete Querschnittsmaß des Bremselements in dieser Richtung verringert.

4. Vorrichtung nach einem der vorhergehenden Ansprüche ,
**dadurch gekennzeichnet, dass** der Bremskörper ein bewegliches Bremsreibelement umfasst, das zwischen der Bremsscheibe und einem Führungselement geführt wird, und dass das Bremsreibelement und/oder der Spalt zwischen dem Führungselement und der Bremsscheibe keilförmig ist und sich in der Richtung verjüngt, in welche das Bremsreibelement durch die Reibkraft zwischen Bremsscheibe und Bremsreibelement bewegt wird.

5. Vorrichtung nach einem der vorhergehenden Ansprüche,
**dadurch gekennzeichnet, dass** an einer Winkelposition der Bremsscheibe zwei sich gegenüberliegende Bremskörper zum beidseitigen Bremseingriff an der Bremsscheibe angeordnet sind.

6. Vorrichtung nach einem der vorhergehenden Ansprüche,
**gekennzeichnet durch** eine mittels eines Verriegelungselements in einer vorgespannten Lage verriegelte Druckfeder, die bei Entriegelung den Bremskörper aus der ersten in die zweite Position bewegt.

7. Vorrichtung nach dem vorhergehenden Anspruch ,
**gekennzeichnet durch** eine pyrotechnische Ladung, die mit der Steuerungsvorrichtung verbunden ist um **durch** diese gezündet zu werden und die so mit dem Verriegelungselement gekoppelt ist, dass bei Zündung das Verriegelungselement entriegelt wird.

8. Vorrichtung nach dem vorhergehenden Anspruch 6 oder 7, **gekennzeichnet durch** einen Kolben, der längsverschieblich in einem Zylinderraum angeordnet ist und mit dem Bremskörper verbunden ist, und **durch** einen Verbindungskanal zum Leiten der Verbrennungsgase einer oder der pyrotechnischen Ladung in den Zylinderraum, um bei Zündung der pyrotechnischen Ladung den Bremskörper mittels des Kolbens aus der ersten in die zweite Position zu bewegen.

9. Vorrichtung nach einem der vorhergehenden Ansprüche,
**dadurch gekennzeichnet, dass** die Bremsscheibe drehmomentfest an einer Welle befestigt ist, an der auch das Kreissägeblatt drehmomentfest befestigt ist.

10. Vorrichtung nach einem der vorhergehenden Ansprüche,
**dadurch gekennzeichnet, dass** die Sensorvorrichtung
- ein Sensorsystem mit zumindest einer Bilderfassungsvorrichtung für Licht im sichtbaren Bereich,
- ein Sensorsystem mit zumindest einem Infrarotsensor, und/oder
- ein Sensorsystem mit zumindest einem kapazitiven Sensor umfasst.

11. Vorrichtung nach dem vorhergehenden Anspruch,
**dadurch gekennzeichnet, dass** die Sensorvorrichtung zumindest zwei , vorzugsweise alle drei Sensorsysteme des Anspruchs 10 umfasst und die Steuerungsvorrichtung
i. einen Speicher für Vertrauenswerte.
ii. eine Zuordnungsvorrichtung zum Zuordnen eines vorbestimmten Vertrauenswert zu jedem Signal der Sensorsysteme
iii. eine Auswerteeinheit zum Ermitteln eines Gefährdungszustands aus den mit den Vertrauenswerten gewichteten Sensorsignalen umfasst.

12. Vorrichtung nach einem der vorhergehenden Ansprüche ,
**dadurch gekennzeichnet, dass** die Sensorvorrichtung ein Sensorsystem mit zumindest einer Bilderfassungsvorrichtung für Licht im sichtbaren Bereich umfasst und die Steuerungsvorrichtung eine Bildverarbeitungseinrichtung umfasst, mit der ein gefährdeter Körperteil des Benutzers, insbesondere die Fingerspitzen, erkannt, verfolgt und lokalisiert werden können.

13. Vorrichtung nach einem der vorhergehenden Ansprüche ,
**dadurch gekennzeichnet, dass** die Sensorvorrichtung alle drei Sensorsysteme des Anspruch 10 umfasst und die Steuerungsvorrichtung die Baugruppen gemäß Anspruch 11 umfasst, um die Sensorsignale des infraroten und kapazitiven Sensorsystems gewichtet auszuwerten, und die Bilderfassungvorrichtung im sichtbaren Bereich auf ein Gebiet vor dem Gefahrenbereich ausgerichtet ist, um eine Vorfeldüberwachung durchzuführen und das Vorhandensein eines Körperteils eines Benutzers zu detektieren.

14. Sensorvorrichtung für eine Sicherheitsvorrichtung nach einem der vorhergehenden Ansprüche, umfassend
- ein Sensorsystem mit zumindest einer Bilderfassungsvorrichtung für Licht im sichtbaren Bereich,
- ein Sensorsystem mit zumindest einem Infrarotsensor, und/oder
- ein Sensorsystem mit zumindest einem kapazitiven Sensor, und
- eine Steuerungsvorrichtung, welche mit der Sensorvorrichtung gekoppelt und einer Schneidstopvorrichtung koppelbar ist und derart ausgebildet ist, dass die Schneidstoppvorrichtung aktiviert wird, wenn die Sensorvorrichtung einen Körperteil im Gefahrenbereich detektiert.

15. Sensorvorrichtung nach dem vorhergehenden Anspruch,
**dadurch gekennzeichnet, dass** die Sensorvorrichtung bzw. die Steuerungsvorrichtung nach dem kennzeichnenden Teil eines der vorhergehenden Ansprüche 10-13 ausgebildet ist.

16. Schneidstoppvorrichtung für eine Sicherheitsvorrichtung nach einem der vorhergehenden Ansprüche 1-13, umfassend eine Bremsvorrichtung mit einer Bremsscheibe, die mit einem Kreissägeblatt zur Übertragung eines Drehmoments verbindbar ist und mit zumindest einem Bremskörper, der so ausgebildet ist, dass er
- in einer ersten Position nicht im Bremseingriff mit der Bremsscheibe ist, und
- in einer zweiten Position im Bremseingriff mit der Bremsscheibe ist und in dieser zweiten Position durch die Reibkraft zwischen Bremsscheibe und Bremskörper eine selbstverstärkend Flächenpressungskraft und hieraus resultierende tribologische Bremskraft auf die Bremsscheibe ausübt.

17. Schneidstoppvorrichtung nach dem vorhergehenden Anspruch ,
**dadurch gekennzeichnet, dass** die Bremsvorrichtung nach dem kennzeichnenden Teil eines der vorhergehenden Ansprüche 1-9 ausgebildet ist.

18. Schutzhaube für ein Kreissägeblatt einer Kreissäge,
**dadurch gekennzeichnet, dass** an der Schutzhaube zumindest ein kapazitiver und/oder zumindest ein thermosensitiver Sensor zur Detektion eines menschlichen Körperteils in der Nähe der Schutzhaube angeordnet ist.

19. Schutzhaube nach Anspruch 18,
**dadurch gekennzeichnet, dass** am unteren Rand der Schutzhaube mehrere ein kapazitive Sensoren beabstandet zueinander um die untere Öffnung der Schutzhaube angeordnet sind und/oder im inneren der Schutzhaube der zumindest eine thermosensitive Sensor angeordnet ist.

20. Formatkreissäge,
**gekennzeichnet durch** eine Sicherheitsvorrichtung nach einem der vorhergehenden Ansprüche.
